# EUROPÄISCHE PATENTSCHRIFT

(11) **EP 0 544 100 B1**
(45) Veröffentlichungstag und Bekanntmachung des Hinweises auf die Patenterteilung: **11.12.1996**
(21) Anmeldenummer: 92118064.2
(22) Anmeldetag: 22.10.1992
(51) Int. Cl.: H04M 1/72

(54) **Verfahren zum Ermöglichen des kontrollierten Mithörens beim schnurlosen Telefon**
Method for enabling controlled listening-in to cordless telephone
Méthode permettant l'écoute accompagnée pour téléphone sans fil

(30) Priorität: 27.11.1991 DE 4138886
(43) Veröffentlichungstag der Anmeldung: 02.06.1993
(73) Patentinhaber: GRUNDIG E.M.V. Elektro-Mechanische Versuchsanstalt Max Grundig GmbH & Co. KG, D-90762 Fürth (DE)
(72) Erfinder: Haake, Werner, GRUNDIG E.M.V., Max Grundig, W-8510 Fürth (DE)

(56) Entgegenhaltungen:
- EP-A- 0 214 810
- EP-A- 0 258 739
- EP-A- 0 298 130
- DE-A- 3 514 651
- FR-A- 2 565 757
- US-A- 4 882 746

## Beschreibung

Die Erfindung betrifft ein Verfahren zum kontrollierten Mithören beim schnurlosen Telefon nach dein Oberbegriff des Patentanspruchs 1.

Aus der DE-A1-39 08 940 ist ein Verfahren bekannt, nach dem bei Sende-Empfangsstationen, die über Duplexkanalpaare miteinander in Verbindung stehen, die Übertragungskanäle besonders ökonomisch den einzelnen Stationen zum Senden und Empfangen zugeordnet werden. Hierbei werden die Übertragungskanäle paarweise einander fest als Duplexkanalpaar zugeordnet. Als für die Verbindung geeignet gilt ein Duplexkanalpaar dann, wenn in einer Station zumindest einer der Übertragungskanäle und in der anderen Station der jeweils andere der beiden Übertragungskanäle des Duplexpaares frei ist. Als Empfangskanal wird dann der freie Übertragungskanal gewählt, der Sendekanal kann frei oder belegt sein. Für die Übertragung von Steuerdaten, wie beispielsweise die Kennungen der Sende- und Empfangskanäle, wird mindestens ein Organisationskanal verwendet, der in allen Sende-Empfangsstationen identisch ist. Bei dieser Vorgehensweise ist es erforderlich, daß die Sende-Empfangsstationen während einer Verbindung nahezu ortsfest zueinander angeordnet sein müssen. Es besteht nämlich bei mobilen Sende-Empfangsstationen, die ihre Entfernung zueinander wesentlich verändern, die Gefahr, daß Gespräche durch Interferenz gestört werden. Ein weiterer Nachteil besteht darin, daß ein Organisationskanal benötigt wird.

Aus der EP-OS-0 350 949 ist ein Verfahren bekannt, das es ermöglicht, mehrere Basisstationen und Mobilstationen an einem Konzentrator zu betreiben, wobei die am Konzentrator angeschlossenen Stationen sowohl zusammen als auch einzeln ausgewählt werden können. Hierfür setzt sich die Kennung der Stationen aus zwei Teilen zusammen. Der erste Teil ist für alle am selben Konzentrator angeschlossenen Stationen identisch, der zweite Teil unterscheidet die am selben Konzentrator angeschlossenen Stationen untereinander. Werden durch einen Gruppenruf alle Stationen ausgewählt, wird nur der erste Teil der Nennung überprüft, der zweite Teil wird von den gerufenen Stationen an die rufende Station gesendet, die dann anzeigt, welche Stationen auf den Gruppenruf geantwortet haben.

Bei dem beschriebenen Verfahren ist von Nachteil, daß nur festgestellt wird, welche Stationen betriebsbereit sind. Eine Sprachübertragung wird nicht durchgeführt.

Aus der DE-OS 35 14 651 ist ein schnurloses Telefon bekannt, bei dem die Möglichkeit zur Gesprächsumlegung gegeben ist. Bei diesem Gerät ist es möglich, einen aus einem Telefonleitungsnetz ankommenden Anruf von der Basisstation zur Mobilstation und umgekehrt umzulegen. Hierfür ist an jeder Station eine Internverbindungstaste vorgesehen, bei deren ersten Betätigung der ankommende Ruf gehalten wird. In der anderen Station wird ein ankommendender Ruf signalisiert und bei Betätigung des Gabelumschalters eine Verbindung zwischen Basis- und Mobilstation hergestellt Das schnurlose Telefon befindet sich jetzt im Interverbindungsmodus. Wird an der Basis- oder Mobilstation dieser Interverbindungsmodus durch erneutes Betätigen des Gabelumschalters beendet, so wird der ankommende Ruf von der anderen Station empfangen, die den Internverbindungsmodus nicht beendet hat.

Wird, während der Internverbindungsmodus besteht, an der Mobilstation oder Basisstation die Interverbindungstaste betätigt, so wird der ankommende Ruf in beiden Stationen empfangen und die Stationen stehen zusätzlich miteinander in Verbindung. Es ist eine Konferenzschaltung geschaltet, bei der drei Teilnehmer eine Duplexverbindung zueinander haben.

Für die Übertragung der Sprache wird ein Kanalpaar aus zwei zur Verfügung stehenden Duplexkanalpaaren ausgewählt, wobei das Kanalauswahlsignal über einen Kanalwahlschalter erzeugt und zur Frequenzbestimmung eines lokalen Oszillators im 40 MHz-Band verwendet wird. Zur Übertragung von der Mobilstation zur Basisstation wird der obere Kanal, in umgekehrter Richtung der untere Kanal des ausgewählten Duplexkanalpaares genutzt.

Eine Sprachverbindung zwischen Mobilstation und Basisstation wird nur dann hergestellt, wenn ein übertragener Identifizierungscode, der über DIP-Schalter einstellbar ist, in den zu verbindenden Stationen übereinstimmt.

Bei dem beschriebenen schnurlosen Telefon kann eine Verbindung zwischen maximal drei Gesprächsteilnehmern hergestellt werden. Dadurch ist ein unberechtigtes Mithören des Gesprächs nicht ausgeschlossen. Beim Umlegen eines empfangenen Rufs besteht nämlich sowohl die Möglichkeit aufzulegen, nachdem der Anruf zu einer anderen Endstelle umgeleitet wurde, als auch die Internverbindungstaste zu betätigen, sodaß eine Konferenzschaltung entsteht bei der der Anrufer, der Angerufene, aber auch der Teilnehmer, der das Gespräch umgelegt hat, mithören können.

Ein weiterer Nachteil ist, daß zur Signalübertragung nur zwei Duplexkanalpaare zur Verfügung stehen, wobei der gesamte Sprachverkehr einschließlich dem Datenaustausch zwischen Mobil- und Basisstation über ein Kanalpaar abgewickelt wird. Ein Ausweichen ist nur noch auf das andere Kanalpaar möglich. Ist auch dieses belegt, kann mit dem schnurloses Telefon nicht störungsfrei telefoniert werden.

Weiterhin ist es nachteilig, daß nur eine Mobilstation und damit nur ein weiterer Teilnehmer am Gespräch teilnehmen kann.

Aus der US-A-4 882 746 ist ein schnurloses Telefon bekannt, das aus einer Basisstation, die mit einer Telefonleitung verbunden ist, und mindestens einem Mobilteil besteht. Basisstation und Mobilteil sind dabei derart ausgebildet, daß zwischen ihnen mittels einer Funkverbindung Sprachsignale übertragen werden können. Weiterhin sind Steuerungsmittel vorgesehen, welche auf Steuersignale eines Mobilteils ansprechen, um über die Basisstation Sprachsignale zwischen zwei Mobilteilen im Simplexbetrieb auszutauschen, um ein ankommendes Gespräch zu einem bestimmten Mobilteil zu leiten und um zusätzliche funktionale Baugruppen zu steuern.

Dabei kann aber immer nur ein einziges Mobilteil ein Sprachsignal empfangen.

Der Erfindung liegt die Aufgabe zugrunde, ein schnurloses Telefon derart auszugestalten, daß ohne großen zusätzlichen Aufwand ein Mithören eines Telefongesprächs durch eine oder mehrere Mobilstationen ermöglicht wird. Dabei soll ein unberechtigtes Mithören ausgeschlossen sein.

Diese Aufgabe wird bei einem schnurlosen Telefon durch die kennzeichnenden Merkmale des Patentanspruchs 1 gelöst.

Das erfindungsgemäße Verfahren weist den Vorteil auf, in den Mobilstationen lediglich zusätzliche Schaltmittel zu erfordern. Nur in der Basisstation wird außerdem ein Lautsprecher mit zugehörigem Verstärker benötigt. Die bereits vorhandenen Schaltungen werden für das Mithören mitverwendet.

Weiterhin vorteilhaft ist, daß der gesprächsführende Teilnehmer den Mithörvorgang steuert, indem er die Stationen auswählt, von denen aus das Gespräch mitgehört werden kann und er Teilnehmer an ausgewählten Stationen auch wieder vom Mithören ausschließen kann. Dadurch wird unberechtigtes Mithören unmöglich.

Aus der DE-A1-39 33 835 ist eine Schaltungsanordnung und ein Verfahren zur Auswahl von Übertragungskanälen für eine Funkübertragung bekannt. Bei der daraus bekannten Teilnehmereinrichtung werden in einem Speicher der Belegungszustand und die Belegungsdauer der Funkübertragungskanäle, die durch eine Sendersuchlaufeinrichtung zyklisch abgetastet werden, abgespeichert. Dadurch stehen schnell freie Übertragungskanäle zur Verfügung. Bei dem erfindungsgemäßen Verfahren wird der in der DE-A1-39 33 835 aufgezeigte Weg zur schnellen Bereitstellung freier Übertragungskanäle benutzt.

Die Erfindung wird im folgenden anhand in der Zeichnung dargestellter Ausführungsformen näher beschrieben und erläutert.
Es zeigt:
- Fig. 1: Austausch der Datentelegramme und
- Fig. 2: beteiligte Teilnehmergeräte.

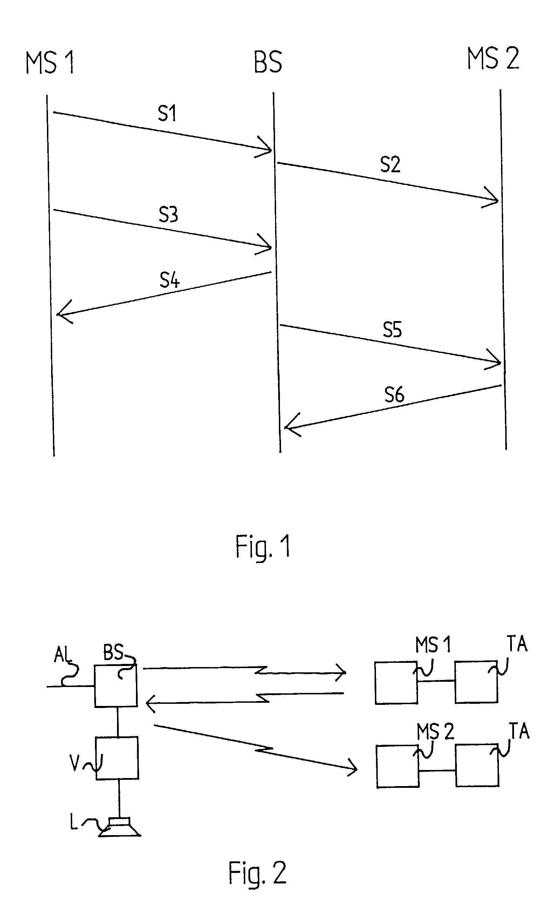

Figur 1 zeigt den Austausch von Daten-Telegrammen zwischen den Mobilstationen MS und der Basisstation BS, wenn zwischen der Mobilstation MS1 und einem entfernten Teilnehmer über das Telefonnetz AL eine Verbindung besteht, der Teilnehmer an Mobilstation MS1 das Gespräch zum Mithören freigibt und an der Mobilstation MS2 ein weiterer Teilnehmer mithören soll.

Hierfür ist es erforderlich, zunächst die Verbindung mit dem entfernten Teilnehmer zu halten und von der Mobilstation MS1 aus durch Betätigung von Schaltmitteln TA eine bestimmte Mobilstation zum Mithören aufzufordern Die Schaltmittel TA können hierbei aus einer Tastenkombination bestehen, die sich aus einer Taste, die zum Mithören auffordert und einer Taste, die die Mobilstation zum Mithören auswählt, zusammensetzt. Diese beiden Tasten können sowohl in der Reihenfolge der Beschreibung als auch gleichzeitig betätigt werden. Danach sendet die Mobilstation MS1 ein Daten-Telegramm S1 an die zum Mithören ausgewählte Mobilstation, z.B. Mobilstation MS2, das der ausgewählten Mobilstation MS2 die Mithörmöglichheit signalisiert. Das Daten-Telegramm S1 wird über die Basistation BS, die die Trägerfrequenz, mit der die Daten übertragen werden ändert, als Daten-Telegramm S2 an die Mobilstation MS2 weitergeleitet. Anschließend suchen die Mobilstation MS1 und die Basisstation BS auf ansich bekannte Weise nach einem oder mehreren freien Übertragungskanälen, wobei der bisher benutzte Übertragungskanal weiterhin belegt bleibt. Findet die Mobilstation MS1 einen oder mehrere freie Kanäle, überträgt sie die Kanalkennungen mit einem Daten-Telegramm S3 an die Basisstation BS. Diese vergleicht, ob auch für sie einer der Kanäle frei ist. Solange Mobil- oder Basisstation keinen Kanal finden, der von beiden als frei erkannt wird, leitet die Basisstation einen neuen Suchvorgang ein, bis nach einer bestimmten Zeit die Kanalsuche endet und dem Teilnehmer an der Mobilstation MS1 angezeigt wird, daß ein Mithören nicht möglich ist. Das unterbrochene Gespräch kann dann auf dem noch belegten Kanal fortgesetzt werden. Wird ein von beiden Stationen als frei erkannter Kanal gefunden, wechseln beide Stationen auf diesen Kanal. Hierfür empfängt die Mobilstation MS1 die Kennung des freien Kanals von der Basisstation BS in einem Daten-Telegramm S4. Der Befehl, daß von der Mobilstation MS1 ggf. ein weiterer freier Kanal gesucht werden soll, wird im Daten-Telegramm S4 übermittelt, wenn die mit dem Daten-Telegramm S3 an die Basisstation BS übermittelten Kanalkennungen in der Basisstation BS nicht zu einem freien Kanal gehörig ermittelt wurden.

Sind Mobilstation MS1 und Basisstation BS auf den neuen Kanal umgeschaltet, sendet die Basisstation BS ein Daten-Telegramm S5 an die zum Mithören ausgewählte Mobilstation MS2, die mit einem Daten-Telegramm S6 den Empfang quittiert und ihren Sender entweder in den Bereitschaftsbetrieb versetzt oder vollständig abschaltet. Nachdem das Daten-Telegramm S6 von der Basisstation BS empfangen wurde, kann das von der Basistation BS gehaltene Gespräch an Mobilstation MS1 fortgesetzt werden, oder eine weitere Mobilstation, wie beschrieben, zum Mithören aufgefordert werden. Wird von der Basisstation BS kein Daten-Telegramm S6 empfangen, kann nach einer gewissen Zeit das gehaltene Gespräch trotzdem an Mobilstation MS1 fortgesetzt werden.

Es besteht weiterhin die Möglichkeit, über spezielle Schaltmittel Mobilstationen gruppenweise zum Mithören aufzufordern. Die Zuordnung von Mobilstationen zu einer bestehenden Gruppe ist hierbei in der Basisstation gespeichert.

An der Mobilstation MS2 wird die Mithörmöglichkeit optisch und akustisch signalisiert und der Sender in einen Bereitschaftsbetrieb versetzt oder abgeschaltet. Die akustische Signalisierung erfolgt wie bei einem ankommenden Ruf, zusätzlich wird in der Anzeige der mithörbereiten Mobilstation MS2 ein Symbol für die Mobilstation MS1 dargestellt, die zum Mithören aufgefordert hat. Betätigt jetzt ein Teilnehmer Schaltmittel TA in der Mobilstation MS2, kann er das laufende Gespräch zwischen dem Teilnehmer an Mobilstation MS1 und einem entfernten Teilnehmer mithören.

Der Kennungsaustausch zwischen Basisstation und der mithörenden Mobilstation MS2 unterbleibt ab dem Zeitpunkt, zu dem der Sender in der mithörenden Mobilstation MS2 in den Bereitschaftsbetrieb versetzt oder abgeschaltet wird, solange, bis die Mobilstation MS2 feststellt, daß auf dem Kanal kein Gespräch mehr stattfindet.

Von der Mobilstation MS1 aus kann das Mithören an der Mobilstation MS2 auch wieder beendet werden. Hierfür muß der Teilnehmer an der Mobilstation MS1 die Schaltmittel TA derart betätigen, als ob die Mobilstation MS2 ein zweites Mal zum Mithören aufgefordert würde. Dann wird beim Empfang des entsprechenden Daten-Telegramms S1 in der Mobilstation MS2 ein freier Kanal gesucht und der Sender wieder in Betrieb genommen, wodurch das Mithören beendet ist.

Wird die Basisstation BS zum Mithören aufgefordert, erkennt sie dies an dem von der Mobilstation MS1 übertragenen Daten-Telegramm S1, und Signalisierungsmittel in der Basisstation BS zeigen die Mithörmöglichkeit an. Werden dann Tastschaltmittel TA an der Basisstation BS betätigt, wird das Signal auf der Amtsleitung einem Verstärker V zugeführt, der es für einen Lautsprecher L verstärkt, sodaß an der Basisstation BS mitgehört werden kann.

Hat die Basisstation BS das Daten-Telegramm S1, das sie zum Mithören auffordert, empfangen, sendet sie ein Daten-Telegramm S4 als Quittung an die Mobilstation MS1 zurück, die sie zum Mithören aufgefordert hat. Die Daten-Telegramme S2 und S3 sind nicht erforderlich, da das Daten-Telegramm S1 nicht weitergeleitet werden muß und auch keine Kanalkennung benötigt wird. Ist in der Basisstation BS eine Anzeige vorhanden, kann angezeigt werden, von welcher Mobilstation aus sie zum Mithören aufgefordert wurde.

Alternativ zu einer vollständigen neuen Suche von Basisstation BS und Mobilstation MS1 nach einem Übertragungskanal kann die Übertragung an Mobilstation MS2 auch über den bereits zwischen Basistation BS und Mobilstation MS1 genutzten Übertragungskanal erfolgen.

Figur 2 zeigt die beteiligten Geräte. Zwischen dem Teilnehmer mit der Mobilstation MS1 und dem entfernten Teilnehmer, dessen Sprachsignal über den Hauptanschluß AL zur Basisstation BS gelangt und zur Mobilstation MS1 übertragen wird, besteht eine Duplexverbindung, sodaß sich beide Teilnehmer verstehen können. Für den Teilnehmer an Mobilstation MS2 besteht nur die Möglichkeit, die anderen beiden Teilnehmer zu hören, er selbst wird von ihnen nicht gehört. Zu diesem Teilnehmer besteht nur eine Simplexverbindung.

## Patentansprüche

1. Verfahren zum Ermöglichen des kontrollierten Mithörens eines Gesprächs beim schnurlosen Telefon, dessen Sende/Empfangseinheit (BS) über eine Hauptanschlußleitung (AL) mit einem Nachrichtennetz in Verbindung steht und bei dem über Duplex-Funkkanäle eine Verbindung zu einem oder mehreren der Sende/Empfangseinheit (BS) zugeordneten Teilnehmergeräte (MS1, MS2) besteht, wobei die Duplex-Funkkanäle auf Belegung überprüft und den Teilnehmergeräten (MS1, MS2) für das Mithören entsprechend zugeordnet werden, **dadurch gekennzeichnet,** daß ein Duplex-Kanalpaar durch einmaliges Betätigen von Schaltmitteln (TA) eines Teilnehmergeräts (MS1) mindestens einem durch die Schaltmittel (TA) ausgewählten weiteren, derselben Sende/Empfangseinheit (BS) zugeordneten Teilnehmergerät (MS2) zugeteilt wird, wobei der Sender des zusätzlichen Teilnehmergeräts (MS2) abgeschaltet wird, wodurch nach Betätigen von Schaltmitteln (TA) am Teilnehmergerät (MS2) ein Mithören möglich ist und daß durch nochmaliges Betätigen derselben Schaltmittel (TA) am Teilnehmergerät (MS1), dessen Sender nicht abgeschaltet ist, einem Teilnehmergerät (MS2), dem dasselbe Duplex-Kanalpaar zugeordnet ist und dessen Sender abgeschaltet ist, ein freies Duplex-Kanalpaar zugeordnet und dessen Sender eingeschaltet wird, wodurch das Mithören beendet ist.

2. Verfahren nach Anspruch 1,
**dadurch gekennzeichnet,**
daß beim einmaligen Betätigen von Schaltmitteln (TA) eines Teilnehmergeräts (MS1) in der Sende/Empfangseinheit (BS) das Signal der Hauptanschlußleitung (AL) über einen Verstärker (V) und einen Lautsprecher (L) mitgehört werden kann und daß durch nochmaliges Betätigen derselben Schaltmittel (TA) das Signal der Hauptanschlußleitung (AL) nicht mehr dem Verstärker (V) oder dem Lautsprecher (L) zugeführt wird.

3. Verfahren nach Patentanspruch 1, **dadurch gekennzeichnet,** daß bei der Suche nach einem freien Übertragungskanal zwischen der Sende/Empfangseinheit (BS) und einem Teilnehmergerät (MS1) die Sende/Empfangseinheit (BS) ebenso wie das Teilnehmergerät (MS1) einen oder mehrere freie Übertragungskanäle suchen, daß das Teilnehmergerät (MS1) die als frei erkannten Übertragungskanäle an die Sende/Empfangseinheit (BS) meldet und daß die Sende/Empfangseinheit (BS) dem Teilnehmergerät (MS) einen von beiden Stationen als frei erkannten Übertragungskanal zuteilt oder, wenn kein von beiden als frei erkannter übertragungskanal vorliegt, einen neuen Suchvorgang einleitet oder mit einer Fehlermeldung in der Anzeige des Teilnehmergeräts (MS1) nach einer bestimmten Zeit den Suchvorgang abbricht.

## Claims

1. Method for enabling the controlled listening-in on a call in the case of a cordless telephone whose transmission/reception unit (BS) is connected via a direct exchange line (AL) to a communications network and in which a connection exists to one or more of the subscriber appliances (MS1, MS2) assigned to the transmission/reception unit (BS) via duplex radio channels, the duplex radio channels being checked for seizure and accordingly assigned to the subscriber appliances (MS1, MS2) for listening-in, characterized in that a duplex channel pair is allocated by single actuation of switching means (TA) of a subscriber appliance (MS1) to at least one further subscriber appliance (MS2) selected by the switching means (TA) and assigned to the same transmission/reception unit (BS), the transmitter of the additional subscriber appliance (MS2) being switched off, as a result of which listening-in is possible after actuating switching means (TA) on the subscriber appliance (MS2) and in that, as a result of renewed actuation of the same switching means (TA) on the subscriber appliance (MS1) whose transmitter is not switched off, a free duplex channel pair is assigned to a subscriber appliance (MS2) to which the same duplex channel pair is assigned and whose transmitter is switched off, its transmitter being switched on, thereby terminating the listening-in.

2. Method according to Claim 1, characterized in that it is possible to listen in on the direct exchange line (AL) signal via an amplifier (V) and a loudspeaker (L) in the case of the single actuation of switching means (TA) of a subscriber appliance (MS1) in the transmission/reception unit (BS) and in that, as a result of repeat actuation of the same switching means (TA), the direct exchange line (AL) signal can no longer be fed to the amplifier (V) or to the loudspeaker (L).

3. Method according to Patent Claim 1, characterized in that, during the search for a free transmission channel between the transmission/reception unit (BS) and a subscriber appliance (MS1), the transmission/reception unit (BS) searches for one or more free transmission channels, as does the subscriber appliance (MS1), in that the subscriber appliance (MS1) signals the transmission channels recognized as free to the transmission/reception unit (BS) and in that the transmission/reception unit (BS) allocates a transmission channel recognized as free by both stations to the subscriber appliance (MS) or, if no transmission channel recognized as free is available, initiates a new search procedure or terminates the search procedure after a certain time with a fault signal in the display of the subscriber appliance (MS1).

## Revendications

1. Procédé pour permettre l'écoute contrôlée d'une conversation dans le cas d'un téléphone sans fil, dont l'unité d'émission/de réception (BS) est reliée à un réseau de transmission d'informations par l'intermédiaire d'une ligne de raccordement principale (AL) et selon lequel une liaison avec un ou plusieurs appareils d'abonnés (MS1,MS2) associés à l'unité d'émission/de réception (BS) est établie par l'intermédiaire de canaux hertziens duplex, et selon lequel l'occupation des canaux hertziens duplex est contrôlée et les canaux hertziens duplex sont associés de façon correspondante à l'appareil d'abonné (MS1,MS2) pour l'écoute, caractérisé en ce qu'un couple de canaux duplex est affecté, grâce à un actionnement unique de moyens de commutation (TA) d'un appareil d'abonné (MS1), au moins à un autre appareil d'abonné (MS2) sélectionné par les moyens de commutation (TA) et associé à la même unité d'émission/de réception (BS), auquel cas l'émetteur de l'appareil d'abonné supplémentaire (MS2) est débranché, ce qui a pour effet qu'une écoute est possible après l'actionnement de moyens de commutation (TA) au niveau de l'appareil d'abonné (MS2), et que sous l'effet d'un nouvel actionnement des mêmes moyens de commutation (TA) au niveau de l'appareil d'abonné (MS1), dont l'émetteur n'est pas débranché, un couple libre de canaux duplex est associé à un appareil d'abonné (MS2), qui est associé au même couple de canaux duplex et dont l'émetteur est débranché, et l'émetteur de cet appareil d'abonné est branché, ce qui interrompt l'écoute.

2. Procédé selon la revendication 1, caractérisé en ce que lors de l'actionnement unique de moyens de commutation (TA) d'un appareil d'abonné (MS1), dans l'unité d'émission/de réception (BS), le signal de la ligne de raccordement principale (AL) peut être écouté par l'intermédiaire d'un amplificateur (V) et d'un haut-parleur (L), et qu'au moyen d'un nouvel actionnement de ces mêmes moyens de commutation (TA), le signal de la ligne de raccordement principal (AL) n'est plus envoyé à l'amplificateur (V) ou au haut-parleur (L).

3. Procédé selon la revendication 1, caractérisé en ce que lors de la recherche d'un canal libre de transmission entre l'unité d'émission/de réception (BS) et un appareil d'abonné (MS1), l'unité d'émission/de réception (BS) ainsi que l'appareil d'abonné (MS1) recherchent un ou plusieurs canaux de transmission libres, que l'appareil d'abonné (MS1) signale les canaux de transmission identifiés comme étant libres, à l'unité d'émission/de réception (BS) et que l'unité d'émission/de réception (BS) affecte à l'appareil d'abonné (MS) l'un de deux appareils en tant que canal de transmission identifié comme libre, ou, lorsqu'aucun canal de transmission identifié comme libre par les deux appareils n'est présent, déclenche un nouveau processus de recherche ou interrompt le processus de recherche au bout d'un certain intervalle de temps, lors d'une signalisation d'erreur dans l'indication de l'appareil d'abonné (MS1).
